Europäisches Patentamt

(19) European Patent Office

Office européen des brevets

(11) EP 0 988 761 B1

(12) **EUROPÄISCHE PATENTSCHRIFT**

(45) Veröffentlichungstag und Bekanntmachung des Hinweises auf die Patenterteilung:
**27.11.2002  Patentblatt 2002/48**

(21) Anmeldenummer: **98936147.2**

(22) Anmeldetag: **12.06.1998**

(51) Int Cl.⁷: $H04Q\ 7/22$

(86) Internationale Anmeldenummer:
**PCT/DE98/01600**

(87) Internationale Veröffentlichungsnummer:
**WO 98/058459 (23.12.1998 Gazette 1998/51)**

(54) **VERFAHREN UND EINRICHTUNG ZUR STANDORTBEZOGENEN INFORMATION VON MOBILFUNKTEILNEHMERN**

METHOD AND DEVICE FOR COMMUNICATING LOCATION-RELATED INFORMATION TO MOBILE COMMUNICATIONS SUBSCRIBERS

PROCEDE ET DISPOSITIF POUR COMMUNIQUER DES INFORMATIONS DE POSITION A DES ABONNES MOBILES

(84) Benannte Vertragsstaaten:
**AT BE CH DE ES FI FR GB IT LI NL SE**

(30) Priorität: **13.06.1997  DE 19724969**

(43) Veröffentlichungstag der Anmeldung:
**29.03.2000   Patentblatt 2000/13**

(73) Patentinhaber: **T-Mobile Deutschland GmbH**
**53227 Bonn (DE)**

(72) Erfinder:
• **BAUMANN, Jürgen**
  **D-53111 Bonn (DE)**
• **LÜCK, Bernd**
  **D-53227 Bonn (DE)**

• **SCHMITZ, Christoph**
  **D-53119 Bonn (DE)**

(74) Vertreter: **Riebling, Peter, Dr.-Ing.**
**Patentanwalt**
**Postfach 31 60**
**88113 Lindau (DE)**

(56) Entgegenhaltungen:
**EP-A- 0 647 076         FR-A- 2 736 234**
**GB-A- 2 201 865**

• **MEYER M J ET AL: "WIRELESS ENHANCED 9-1-1 SERVICE-MAKING IT A REALITY" 21. September 1996 , AT & T TECHNICAL JOURNAL, VOL. 1, NR. 2, PAGE(S) 188 - 202 XP000656013 siehe Seite 191 - Seite 195**

## Beschreibung

Die vorliegende Erfindung betrifft ein Verfahren und eine Einrichtung zur standortbezogenen Information von Mobilfunkteilnehmern nach dem Oberbegriff des Patentanspruchs 1.

Bei modernen, digitalen Mobilfunksystemen ist dem Mobilfunksystem zumindest bei eingeschaltetem Mobilfunkendgerät bekannt, in welcher Funkzelle sich der Mobilfunkteilnehmer gerade aufhält bzw. von welcher Basisstation er gerade versorgt wird.

Diese, aufgrund unterschiedlicher Zellengrößen, relativ grobe Standortinformation ist ausreichend, um für verschiedenste Anwendungen genutzt zu werden, welche eine Standortinformation benötigen.

In Verbindung mit Informationssystemen für Mobilfunkteilnehmer, z.B. Verkehrsinformationsdienst, Wetterdienst, Zielführung usw., ist es wichtig, den ungefähren Standort des Mobilfunkteilnehmers zu wissen, damit die Informationen standortbezogen aufbereitet dem Mobilfunkteilnehmer zur Verfügung gestellt werden können. Für diese Anwendungen reicht eine auf die Zellengröße bzw. den Standort der versorgenden Basisstation bezogene Standortinformation völlig aus. Ein derartiges System zur standortbezogenen Information von Mobilfunkteilnehmern ist in der EP-A-0 647 076 offenbart. Ein Problem besteht jedoch darin, die Standortinformation, welche nur intern im Mobilfunksystem zur Verfügung steht, herauszufiltern und für externe Anwendungen nutzbar zu machen.

Der Artikel von Meyer, Michael J. et al. "Wireless Enhanced 9-1-1 Service - Making it a reality" in: AT & T Technical Journal, Vol. 1, Nr. 2, Autumn 1996, Seiten 188-202 beschreibt ein Notrufsystem für Teilnehmer eines mobilen Kommunikationsnetzes basierend auf dem in den USA gebräuchlichen 911 Notrufsystem. Beim Absetzen eines Notrufs wird der Teilnehmer - basierend auf dem netzintern mit ausreichender Genauigkeit bestimmbaren Standort des Teilnehmers - mit der zuständigen Notrufzentrale verbunden, wobei gleichzeitig über die intelligente Signalisierung des ISDN Netzes die Mobilrufnummer und der ungefähre Standort des Anrufers an die Notrufzentrale übermittelt werden. Das Problem der Versorgung des Teilnehmers mit lokalen, auf seinen Standort bezogenen Informationen ist in diesem Artikel nicht angesprochen.

Die Aufgabe der Erfindung liegt darin, ein Verfahren zur standortbezogenen Information von Mobilfunkteilnehmern vorzuschlagen, welches es bei geringem technischen Aufwand erlaubt,in Abhängigkeit vom Standort des Mobilfunkteilnehmers diesem gezielt Informationen - auch von mobilfunkexternen Informationsdiensten - zur Verfügung gestellt werden können.

Die Lösung der gestellten Aufgabe erfolgt erfindungsgemäß durch die Merkmale des Patentanspruchs 1.

Abhängig vom Standort des Mobilfunkteilnehmers und bei Anwahl einer für den jeweiligen Informationsdienst reservierten Rufnummer wird dem Teilnehmer eine Verkehrsinformation, Wetterinformation etc. entsprechend seines aktuellen Standortes vom entsprechend angewählten Informationsdienst übermittelt.

Dabei muß die dem Mobilfunksystem bekannte Standortinformation entsprechend erfasst, evtl. codiert und der angewählten Informationszentrale zur Verfügung gestellt werden.

Erfindungsgemäß wird die Kennung der den Mobilfunkteilnehmer versorgenden Funkzelle in der Rufnummer des rufenden Teilnehmers abgebildet. Die Informationszentrale ist über ein Nebenstellenprotokoll (EDSS.1 an eine Mobilfunkvermittlungsstelle angebunden und lässt sich durch eine zugeordnete Diensterufnummer vom Teilnehmer anwählen. Bei Wahl der Diensterufnummer erfolgt ggf. eine Umwertung der Diensterufnummer in eine Langrufnummer (Nebenstellen-Nummer) auf Basis des Basisstationsstandortes des Teilnehmers, d.h. der Standort der aktuellen Basisstation fließt in die Langrufnummer mit ein. Der geographische Standort aller Basisstationen des Mobilfunknetzes ist entsprechend als mehrstellige Ziffer codiert in einer Standortliste abgelegt. Die Langrufnummer kann folgendes Format haben:

    0171 [DA] [Ext]

DA = Diensterufnummer (fest)
Ext = variable Nummer entsprechend des Standortes der den Teilnehmer versorgenden Basisstation

Anhand der variablen Erweiterungsnummer (Ext), welche dem Standort der den Teilnehmer versorgenden Basisstation entspricht, kann die Informationszentrale die entsprechenden, für diese Standortregion relevanten Informationen an den Teilnehmer übermitteln.

Weitere Einzelheiten und Merkmale der Erfindung ergeben sich aus der nachfolgenden Beschreibung eines speziellen Ausführungsbeispiels der Erfindung anhand der Zeichnung. Es zeigt:

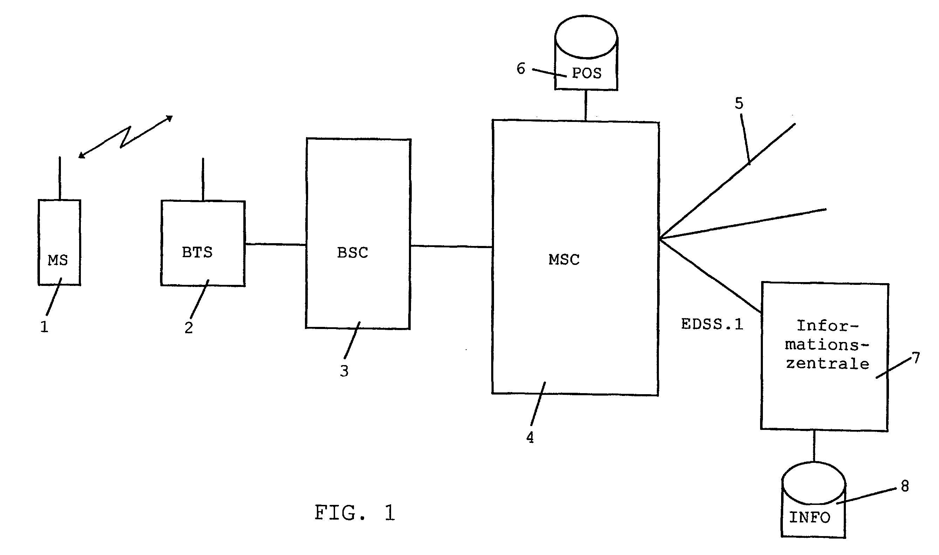

    Figur 1: schematische Darstellung einer Ausführungsform der Erfindung, bei der die Informationszentrale über eine Nebenstellenschnittstelle EDSS.1 an die Vermittlungsstelle (MSC) angebunden ist.

Figur 1 zeigt schematisch die generelle Struktur eines digitalen Mobilfunksystems. Man erkennt eine Mobilstation 1 (MS), die über die Funkschnittstelle mit einer Basisstation 2 (BTS) kommuniziert. Die Basisstation 2 ist über eine Leitung mit dem zugehörigen Basisstationskontroller 3 (BSC) verbunden, welcher in der Regel mehrerer Basisstationen bedient. Der Basisstationskontroller 3 ist wiederum mit einer zugeordneten Vermittlungsstelle 4 (MSC) verbunden, welche in der Regel mehrere Basisstationskontroller bedient. Erfindungsgemäß ist auf Ebene der Vermittlungsstelle 4 eine Datenbank 6 (POS) eingerichtet, in welcher alle Standortinformationen der von der Vermittlungsstelle bedienten Basisstationen 2 abgespeichert sind. Vorzugsweise sind sowohl die geographischen als auch die kartesischen Koordinaten der Basisstationen enthalten. Über eine EDSS.1 Schnittstelle 5 ist die Vermittlungsstelle 4 mit anderen Vermittlungsstellen und einer oder mehreren Informationszentralen 7 verbunden, welche als Nebenstellenanlage an die Vermittlungsstelle 4 angebunden ist. Die Informationszentrale 7 umfasst eine Informationsdatenbank 8 (INFO) in welcher bundesweit z.B. alle Verkehrsinformationen gesammelt und ausgewertet werden. Dabei werden die Verkehrsinformationen nach Regionen (Bundesländer, Kreisgebiete usw. ) sortiert.

Die Informationszentrale 7 besitzt eine reguläre Rufnummer, die von jedem Mobilfunkteilnehmer 1 angewählt werden kann. Nach Anwahl der Rufnummer der Informationszentrale 7 wird zunächst durch das Mobilfunknetz bzw. in der Vermittlungsstelle 4 der ungefähre Aufenthaltsort der Mobilstation ermittelt, indem die Basisstation ermittelt wird, welche die Mobilfunkstation gerade versorgt. Anhand der Informationen in der Standortdatenbank 6 (POS) kann nun der Standort der Basisstation 2 ausgelesen werden. Diese Standortinformation wird zu einer 6-stelligen Ziffer zusammengefasst und an die Rufnummer der Informationszentrale 7 in Form einer Erweiterungsnummer angehängt. Die Verbindung zur Informationszentrale 7 wird nun durchgeschaltet. Die übertragene 6-stellige Ziffer, die den Standort der die Mobilstation versorgenden Basisstation kennzeichnet, wird in der Informationszentrale 7 dazu benutzt, die Mobilstation 1 mit regional aufbereiteten, standortbezogenen Verkehrsinformationen oder dgl. zu versorgen.

Das Verfahren zur Umrechnung der Standortinformation eines Teilnehmers auf Grundlage der geographischen Koordinaten der Mobilfunk-Basisstationen, wie sie in der Datenbank 6 des Mobilfunksystems abgelegt sind, in entsprechende kartesische Koordinaten, aus welchen dann die Rufnummernziffern gebildet werden, wird im folgenden beschrieben. Im folgenden Beispiel wird nur das Gebiet Deutschlands betrachtet.

Es wird eine für Deutschland einheitliche Geocodierung vorgesehen. Von folgenden Vorgaben wird ausgegangen:

- Für die Codierung stehen 6 Dezimalziffern zur Verfügung
- Es wird ein fester Bezugspunkt vorgegeben
- Die angestrebte Auflösung der Koordinatenangabe der Lokalisierung beträgt ca. 1 km.
- Die Positionen der Basisstations-Standorte liegen mit ausreichender Genauigkeit von ca. 0,01 Grad bzw. 0,5 Bogenminuten in einer Datenbank vor.

Als Bezugspunkt für das Gebiet Deutschlands im geographischen Koordinatensystem wird z.B. festgelegt:

- Breitengrad: $\varphi_0 = 47{,}0°$ Nord
- Längengrad : $\lambda_0 = 5{,}0°$ Ost

Der gewählt Bezugspunkt liegt etwas außerhalb (südwestlich) des deutschen Staatsgebietes (Festland und Inseln).

Ausgehend von diesem Bezugspunkt wird ein Gebiet von 1.000 x 1.000 km$^2$ betrachtet, daß sich in Richtung Nord-Ost des Bezugspunktes erstreckt, wobei der Bezugspunkt den Nullpunkt darstellt. Alle Positionen innerhalb des Staatsgebietes Deutschlands können somit als positive Koordinaten angegeben werden.

Die Codierung erfolgt in Schritten von 1 km so daß sich jede Koordinate im gewählten Raster durch 6 Dezimalziffern darstellen lässt (3 Ziffern für x-Koordinate, 3 Ziffern für y-Koordinate).

Die Formeln für die Umrechnung von geographischen Koordinaten $(\varphi_1;\lambda_1)$ in kartesische Koordinaten bezogen auf einen Referenzpunkt $(\varphi_0;\lambda_0)$ lauten:

$$x = (\lambda_1 - \lambda_0)/ 360° * U_{Erde} * \cos \varphi_1; \hspace{3cm} (1)$$

$$y = (\varphi_1 - \varphi_0)/ 360° * U_{Erde}; \hspace{3cm} (2)$$

$U_{Erde}$ = Erdumfang

Eine Rundung auf volle km-Angaben erfolgt einfach durch Abschneiden der Nachkommastellen. Es ist zu prüfen, ob keine Koordinatenwerte auftreten, die mehr als jeweils 3 Dezimalstellen besitzen.

Die Positionsangabe der Basisstations-Standorte, die in geographischen Koordinaten (Dezimaldarstellung mit 5 Nachkommastellen) vorliegt, wird anhand obiger Vorgaben und Formeln als kartesische Koordinaten codiert:

Als konkretes Beispiel wird ein Basisstationsstandort mit den geographischen Koordinaten $\varphi_1$ = 53,98765; $\lambda_1$ = 6,12345 angenommen. Zur Ermittlung der Abstände in ost-westlicher bzw. nord-südlicher Richtung des Basisstationsstandortes zum Bezugspunkt wird der Radius der Erdkugel zur Vereinfachung mit konstant $r_{Erde}$ = 6.371 km angenommen. Das entspricht einen Erdumfang von $U_{Erde}$ = 40.030 km.

Zuerst wird anhand der Gleichungen (1) und (2) der Abstand des zu ermittelnden Standortes zum Bezugspunkt in östlicher Richtung mit einer Auflösung von 1 km ermittelt. Dieser beträgt:

$$x = (6,12345° - 5°) / 360° * 40.030\ km * \cos(53,98765°)$$

$$= 73,44874\ km;$$

Der Abstand in nördlicher Richtung beträgt:

$$y = (53,98765° - 47°) / 360° * 40.030\ km = 776,98786\ km;$$

Somit ergeben sich nach entsprechender Rundung durch Abschneiden der Nachkommastellen für den Standort der Basisstation die kartesischen Koordinaten (x = 073; y=776). Die x- und y-Koordinaten werden immer mit 3 Stellen angegeben und zu einer 6 stelligen Dezimalzahl (positive Ganzzahl oder Null) zusammengefasst, wobei die x-Komponente die führenden Stellen einnimmt.

Der Lokalisierungscode der betreffenden Basisstation lautet also 073776

Die Umrechnung des Lokalisierungscodes in zurück in die geographischen Koordinaten kann, falls notwendig, durch Umstellung der Gleichungen (1) und (2) erfolgen.

Zeichnungslegende

1    Mobilstation
2    Basisstation
3    Basisstationskontroller
4    Vermittlungsstelle
5    EDSS.1-Schnittstelle
6    Standortdatenbank
7    Informationszentrale
8    Informationsdatenbank

**Patentansprüche**

1.  Verfahren zur standortbezogenen Information von Mobil funkteilnehmern, mit folgenden Schritten:

- Einrichten mindestens einer eine Informationsdatenbank (8) enthaltenden Informationszentrale (7), welche an eine Vermittlungsstelle (4) des Mobilfunknetzes angebunden ist und über eine vorgegebene Rufnummer von dem Mobilfunkteilnehmer anwählbar ist,
- Einrichten einer Standortdatenbank (6) innerhalb des Mobilfunknetzes im Bereich der Vermittlungsstelle (4), welche die Standortkoordinaten aller von der Vermittlungsstelle (4) bedienten Basisstationen (2) in codierter Form enthält,
- Anwahl der vorgegebenen Rufnummer durch den Mobilfunkteilnehmer und Herstellen einer Kommunikationsverbindung mit der Informationszentrale (7),
- Ermitteln des ungefähren Aufenthaltsortes des Mobilfunkteilnehmers anhand der im Mobilfunknetz vorhandenen Standortinformation in Form der Kennung der die Mobilstation (1) augenblicklich versorgenden Basisstation (2),
- Ermitteln des geographischen Standortes der Basisstation anhand der Kennung durch Abfrage der Standortdatenbank (6),
- Codieren des geographischen Standortes der Basisstation als mehrstellige Ziffer

- Anhängen der mehrstelligen Ziffer als Erweiterungsnummer an die vom Mobilfunkteilnehmer gewählte Rufnummer,
- Durchschalten der Verbindung zur Informationszentrale (7) mit dieser erweiterten Rufnummer,
- Übermitteln von standortbezogen Informationen von der Informationszentrale zum Mobilfunkteilnehmer anhand der Erweiterungsnummer.

2. Verfahren nach Anspruch 1, **dadurch gekennzeichnet,**
   **daß** die Informationszentrale (7) über ein Nebenstellenprotokoll EDSS.1 mit der Vermittlungsstelle (4) des Mobilfunksystems kommuniziert.

3. Verfahren nach Anspruch 1 oder 2, **dadurch gekennzeichnet,**
   **daß** der Mobilfunkteilnehmer zunächst eine Kurzwahlrufnummer wählt, die in der Vermittlungsstelle (4) unter nachträglichem Anfügen der Erweiterungsnummer in die Rufnummer der Informationszentrale (7) umgesetzt wird.

4. Verfahren nach einem der Ansprüche 1 bis 3, **dadurch gekennzeichnet,**
   **daß** alle relevanten, von der Informationszentrale (7) erfasste Informationen während eines vorgegebenen Zeitraumes automatisch an die Mobilstation (1) übermittelt werden.

**Claims**

1. Method for providing location-related information to mobile radiotelephone subscribers, with the following steps:

   - setting-up of at least one central information unit (7) which contains an information data bank (8), is linked to a switching centre (4) of the mobile radiotelephone network, and can be dialled by the mobile radiotelephone subscriber via a specified telephone number,
   - setting-up of a location data bank (6) within the mobile radiotelephone network in the region covered by the switching centre (4), which contains in coded form the location coordinates of all base stations (2) served by the switching centre (4),
   - dialling of the specified telephone number by the mobile radiotelephone subscriber and setting-up of a communication connection with the central information unit (7),
   - determination of the approximate whereabouts of the mobile radiotelephone subscriber with the aid of the location information existing in the mobile radiotelephone network in the form of the identification of the base station (2) presently serving the mobile station (1),
   - determination of the geographical location of the base station with the aid of the identification by interrogation of the location data bank (6),
   - encoding of the geographical location of the base station as a multidigit number,
   - appending of the multidigit number as an extension to the telephone number dialled by the mobile radiotelephone subscriber,
   - switching of the connection to the central information unit (7) with this extended telephone number,
   - provision of location-related information by the central information unit to the mobile radiotelephone subscriber with the aid of the extension number.

2. Method according to Claim 1, **characterized in that**
   the central information unit (7) communicates with the switching centre (4) of the mobile radiotelephone system via an EDSS.1 extension protocol.

3. Method according to Claim 1 or 2, **characterized in that**
   the mobile radiotelephone subscriber initially dials a short code dialling telephone number which is converted in the switching centre (4) into the telephone number of the central information unit (7) by the subsequent appending of the extension number.

4. Method according to any one of Claims 1 to 3, **characterized in that**
   all relevant information acquired by the central information unit (7) during a specified period is automatically passed to the mobile station (1).

**EP 0 988 761 B1**

**Revendications**

1. Procédé pour informer des abonnés au réseau radiotéléphonique mobile en fonction de leur position, comprenant les étapes suivantes :

   - création d'au moins un central d'information (7) qui contient une banque de données d'information (8), qui est relié à un central (4) du réseau radiotéléphonique mobile et qui peut être appelé par l'abonné grâce à un numéro d'appel prédéfini,
   - création d'une banque de données de position (6) à l'intérieur du réseau radiotéléphonique mobile, dans la zone du central (4), qui contient sous une forme codée les coordonnées de position de toutes les stations de base (2) desservies par le central (4),
   - appel, par l'abonné, du numéro d'appel prédéfini et établissement d'une liaison de communication avec le central d'information (7),
   - recherche du lieu approximatif où se trouve l'abonné à l'aide de l'information de position présente dans le réseau, sous la forme de l'identification de la station de base (2) qui alimente momentanément la station mobile (1),
   - recherche de la position géographique de la station de base à l'aide de l'identification, grâce à une interrogation de la banque de données de position (6),
   - codage de la position géographique de la station de base sous la forme d'un nombre à plusieurs chiffres,
   - association du nombre à plusieurs chiffres, comme numéro d'extension, au numéro d'appel appelé par l'abonné,
   - raccordement direct de la liaison avec le central d'information (7) avec ce numéro d'appel étendu,
   - transmission à l'abonné d'informations en fonction de sa position, par le central d'information, à l'aide du numéro d'extension.

2. Procédé selon la revendication 1, **caractérisé en ce que** le central d'information (7) communique avec le central (4) du système de radiotéléphonie mobile par l'intermédiaire d'un protocole de poste supplémentaire EDSS.1.

3. Procédé selon la revendication 1 ou 2, **caractérisé en ce que** l'abonné compose tout d'abord un numéro d'appel abrégé qui est converti dans le central (4) en numéro d'appel du central d'information (7) avec l'adjonction ultérieure du numéro d'extension.

4. Procédé selon l'une des revendications 1 à 3, **caractérisé en ce que** toutes les informations importantes enregistrées par le central d'information (7) sont transmises automatiquement à la station mobile (1) pendant un laps de temps prédéfini.

MS

1

BTS

2

BSC

3

6 — POS

MSC

4

5

EDSS.1

Informationszentrale

7

INFO

8

FIG. 1

EP 0 988 761 B1